# EUROPEAN PATENT SPECIFICATION

(11) **EP 4 264 708 B1**
(45) Date of publication and mention of the grant of the patent: **25.11.2026**
(21) Application number: 22856187.4
(22) Date of filing: 09.08.2022
(51) Int. Cl.: H01M 4/36, H01M 4/48, H01M 4/58, H01M 4/587, H01M 4/38, H01M 10/052, H01M 4/62, H01M 4/02, H01M 4/134, H01M 4/131, H01M 4/133, H01M 10/0525

(54) **NEGATIVE ELECTRODE ACTIVE MATERIAL, AND NEGATIVE ELECTRODE AND SECONDARY BATTERY INCLUDING SAME**
NEGATIVELEKTRODENAKTIVMATERIAL UND NEGATIVELEKTRODE UND SEKUNDÄRBATTERIE DAMIT
MATÉRIAU ACTIF D'ÉLECTRODE NÉGATIVE, ET ÉLECTRODE NÉGATIVE ET BATTERIE SECONDAIRE LE COMPRENANT

(30) Priority: 13.08.2021 KR 20210107524; 04.05.2022 KR 20220055522
(43) Date of publication of application: 25.10.2023
(73) Proprietor: LG Energy Solution, Ltd., Seoul 07335 (KR)
(72) Inventor: CHOI, Junghyun, Daejeon 34122 (KR); PARK, Semi, Daejeon 34122 (KR); PARK, Heeyeon, Daejeon 34122 (KR); SHIN, Sun Young, Daejeon 34122 (KR); OH, Ilgeun, Daejeon 34122 (KR); LEE, Yong Ju, Daejeon 34122 (KR)
(74) Representative: Hoffmann Eitle
(86) International application number: PCT/KR2022/011871
(87) International publication number: WO 2023/018190

(56) References cited:
- EP-A1- 3 799 161
- EP-B1- 3 306 711
- WO-A1-2021/066746
- CN-A- 112 018 367
- JP-B2- 6 592 603
- KR-B1- 102 207 997
- US-A1- 2018 175 377

## Description

### Technical Field

This application claims priority to and the benefit of Korean Patent Application No. 10-2021-0107524 filed in the Korean Intellectual Property Office on August 13, 2021 and Korean Patent Application No. 10-2022-0055522 filed in the Korean Intellectual Property Office on May 4, 2022.

The present invention relates to a negative electrode active material, and a negative electrode and a secondary battery including the same.

### BACKGROUND ART

Recently, with the rapid spread of electronic devices using batteries such as mobile phones, notebook-sized computers, and electric vehicles, the demand for small and lightweight secondary batteries having relatively high capacity is rapidly increasing. In particular, lithium secondary batteries are lightweight and have high energy density, and thus have attracted attention as driving power sources for mobile devices. Accordingly, research and development efforts to improve the performance of lithium secondary batteries have been actively conducted.

In general, a lithium secondary battery includes a positive electrode, a negative electrode, a separator interposed between the positive electrode and the negative electrode, and an electrolyte. Further, for the positive electrode and the negative electrode, an active material layer each including a positive electrode active material and a negative electrode active material, respectively, may be formed on a current collector. In general, lithium-containing metal oxides such as LiCoO₂ and LiMn₂O₄ have been used as the positive electrode active material for the positive electrode, and lithium-free carbon-containing active materials and silicon-containing active materials have been used as the negative electrode active material for the negative electrode.

Among the negative electrode active materials, the silicon-containing active material is attracting attention because the silicon-containing active material has a high capacity and excellent high-speed charging characteristics compared to the carbon-containing active material. However, the silicon-containing active material has a disadvantage in that the initial efficiency may be low because the degree of volume expansion/contraction due to charging/discharging may be large and the irreversible capacity may be large.

Meanwhile, among the silicon-containing active materials, a silicon-containing oxide, specifically, a silicon-containing oxide represented by SiOₓ (0<x<2) has an advantage in that the degree of volume expansion/contraction due to charging/discharging may be low compared to other silicon-containing active materials such as silicon (Si). However, the silicon-containing oxide still has a disadvantage in that the initial efficiency may be lowered depending on the presence of the irreversible capacity.

In this regard, studies have been continuously conducted to reduce irreversible capacity and improve initial efficiency by doping or intercalating a metal such as Li, Al, and Mg, into silicon-containing oxides. However, in the case of a negative electrode slurry including a metal-doped silicon-containing oxide as a negative electrode active material, there may be a problem in that the metal oxide formed by doping the metal reacts with moisture to increase the pH of the negative electrode slurry and change the viscosity thereof. That is, there may be a problem in that the state of the prepared negative electrode may become poor and the charge/discharge efficiency of the negative electrode may be reduced.

Accordingly, there is a need for the development of a negative electrode active material capable of improving the phase stability of a negative electrode slurry including a silicon-containing oxide and improving the charge/discharge efficiency of a negative electrode prepared therefrom.

Korean Patent No. 10-0794192 relates to a method for preparing a carbon-coated silicon-graphite composite negative electrode active material for a lithium secondary battery and a method for preparing a secondary battery including the same, but has a limitation in solving the above-described problems.

EP 3 306 711 A1 relates to a negative electrode active material for a non-aqueous electrolyte secondary battery, including: negative electrode active material particles that contain a silicon compound (SiO x : 0.5 ≤ x ≤ 1.6) containing a Li compound; wherein the silicon compound is at least partially coated with a carbon coating, the negative electrode active material particles are coated with a coating composed of at least one of a compound having a boron-fluorine bond and a compound having a phosphorous-fluorine bond on at least a part of the surface of either or both of the silicon compound and the carbon coating, the negative electrode active material particles contain a boron element or a phosphorous element in a range of 10 ppm by mass to 10000 ppm by mass with respect to the total amount of the negative electrode active material particles.

EP 3 799 161 A1 describes a silicon-based composite anode material, including a silicon-based material core and a coating layer coated on a surface of the silicon-based material core, where the coating layer includes a first coating layer disposed on the surface of the silicon-based material core and a second coating layer disposed on a surface of the first coating layer, the first coating layer includes a two-dimensional quinone-aldehyde covalent organic framework material, and the second coating layer includes a fast ion conductor material.

### Disclosure OF INVENTION

### Technical Problem

The present invention has been made in an effort to provide a negative electrode active material, and a negative electrode and a secondary battery including the same. The invention is set out in the appended set of claims.

### Solution to Problem

The present invention provides a negative electrode active material including: silicon-containing composite particles including SiOₓ (0<x<2) and a Li compound; a carbon layer on at least a part of a surface of the silicon-containing composite particles; a surface layer including an amorphous phase on at least a part of the surface of the silicon-containing composite particles; wherein the amorphous phase comprised in the surface layer is comprised in an amount of more than 50 parts by weight based on a total 100 parts by weight of the surface layer; and wherein the surface layer comprises an Al_{z}P_{w}Oᵥ phase, wherein 0<z≤10, 0<w≤10, and 0<v≤10, or a Li_{y}Al_{z}P_{w}Oᵥ phase, wherein 0<y≤10, 0<z≤10, 0<w≤10, and 0<v≤10, and wherein the Al_{z}P_{w}Oᵥ phase or the Li_{y}Al_{z}P_{w}Oᵥ phase is an amorphous phase.

The present invention also provides a negative electrode including the negative electrode active material, as well as a a secondary battery including the negative electrode.

### Advantageous Effects of Invention

The negative electrode active material according to the present invention includes a surface layer on silicon-containing composite particles, in which the surface layer includes an amorphous phase, which can effectively remove lithium by-products included in the silicon-containing composite particles. This is done by providing the surface layer as described above on the surface of silicon-containing composite particles, which can prevent a phenomenon in which the lithium by-products or lithium compounds in the silicon-containing composite particles react with the moisture of a slurry to degrade the physical properties of the slurry by effectively coating unreacted lithium by-products. Further, since the surface layer has an amorphous phase to facilitate the entry and exit of Li ions, there may be an effect capable of stably implementing the capacity, efficiency, resistance performance and/or service life of a battery while effectively reducing side reactions on the slurry.

The negative electrode active material according to the present invention may have an effect in that the discharging rate-limiting characteristics (rate capability) become excellent because the surface layer includes Li to reduce the Li diffusion resistance of the negative electrode active material surface.

### BRIEF DESCRIPTION OF THE DRAWINGS

Fig. 1 illustrates an embodiment of the invention where a silicon-containing composite particle has a surface coated with a carbon layer and a surface layer is coated on the carbon layer (e.g., the surface layer is a thin film).
Fig. 2 illustrates an embodiment of the invention where a silicon-containing composite particle has a surface coated with a carbon layer and a surface layer is coated on a portion of the carbon layer (e.g., the surface layer is an island-type layer).
Fig. 3 illustrates an embodiment of the invention where a silicon-containing composite particle has partially overlapped layers and non-overlapped layers of a carbon layer and a surface layer.

### Best Mode for Carrying out the Invention

Hereinafter, the present specification will be described in more detail.

When one part "includes" one constituent element in the present specification, unless otherwise specifically described, this does not mean that another constituent element is excluded, but means that another constituent element may be further included.

When one member is disposed "on" another member in the present specification, this includes not only a case where the one member is brought into contact with another member, but also a case where still another member is present between the two members.

Singular expressions of the terms used in the present specification include plural expressions unless they have definitely opposite meanings in the context.

In the present specification, the crystallinity of a structure included in a negative electrode active material is confirmed by X-ray diffraction analysis, the X-ray diffraction analysis may be performed using an X-ray diffraction (XRD) analyzer (trade name: D4-endavor, manufacturer: Bruker), and in addition to the apparatus, an apparatus used in the art may be appropriately employed.

In the present specification, the presence or absence of an element and the content of the element in a negative electrode active material is confirmed by ICP analysis, and the ICP analysis may be performed using an inductively coupled plasma atomic emission spectrometer (ICPAES, Perkin Elmer 7300).

In the present specification, an average particle diameter (D₅₀) may be defined as a particle diameter corresponding to 50% of a cumulative volume in a particle size distribution curve (graph curve of the particle size distribution map) of the particles. The average particle diameter (D₅₀) may be measured using, for example, a laser diffraction method. The laser diffraction method can generally measure a particle size of about several mm from the submicron region, and results with high reproducibility and high resolution may be obtained.

### <Negative electrode active material>

An exemplary embodiment of the present invention provides a negative electrode active material including: silicon-containing composite particles including SiOₓ, wherein 0<x<2, and a Li compound; a carbon layer on at least a part of a surface of the silicon-containing composite particles; a surface layer including an amorphous phase on at least a part on the surface of the silicon-containing composite particles; wherein the amorphous phase comprised in the surface layer is comprised in an amount of more than 50 parts by weight based on a total 100 parts by weight of the surface layer; and wherein the surface layer comprises an Al_{z}P_{w}Oᵥ phase, wherein 0<z≤10, 0<w≤10, and 0<v≤10, or a Li_{y}Al_{z}P_{w}Oᵥ phase, wherein 0<y≤10, 0<z≤10, 0<w≤10, and 0<v≤10, and wherein the Al_{z}P_{w}Oᵥ phase or the Li_{y}Al_{z}P_{w}Oᵥ phase is an amorphous phase.

In general, lithium by-products formed by unreacted lithium in the process of doping silicon-containing particles with Li are present on the particles, and thus become basic when a slurry is formed. Therefore, there is a problem in that rheological properties of the slurry are changed and the Si of the silicon-containing particles reacts with a base to generate gas.

Therefore, in the present invention, lithium by-products formed during a Li doping process are effectively removed by providing a surface layer on Li-doped silicon-containing composite particles, and simultaneously, the formed surface layer is formed on the silicon-containing composite particles, and thus serves to passivate the particles. In this case, since the formed surface layer includes an amorphous phase to facilitate the entry and exit of Li ions, there is an effect capable of stably implementing the capacity, efficiency, resistance performance and/or service life of a battery while effectively reducing side reactions on the slurry.

When the surface layer further includes Li, there is an effect in that the discharging rate-limiting characteristics (rate capability) become excellent because the Li diffusion resistance of the negative electrode active material surface is reduced.

The negative electrode active material according to the present invention includes silicon-containing composite particles. The silicon-containing composite particles include SiOₓ, wherein 0<x<2, and a Li compound, and have a carbon layer provided on at least a part of the surface thereof.

The SiOₓ(0<x<2) may correspond to a matrix in the silicon-containing composite particle. The SiOₓ (0<x<2) may be in a form including Si and SiO₂, and the Si may also form a phase. That is, the x corresponds to the number ratio of O for Si included in the SiOₓ (0<x<2). When the silicon-containing composite particles include the SiOₓ (0<x<2), the discharge capacity of a secondary battery may be improved.

In the present invention, the silicon-containing composite particles include a Li compound.

The Li compound may correspond to a dopant in the silicon-containing composite particle. The Li compound may be present in the form of at least one of a lithium atom, a lithium silicate, a lithium silicide, and a lithium oxide in the silicon-containing composite particle. When the silicon-containing composite particles include a Li compound, there is an effect that the initial efficiency is improved.

The Li compound is in a form in which the silicon-containing composite particles are doped with the compound, and may be distributed on the surface and/or inside of the silicon-containing composite particle. The Li compound is distributed on the surface and/or inside of the silicon-containing composite particle, and thus may control the volume expansion/contraction of the silicon-containing composite particles to an appropriate level, and may serve to prevent damage to the active material. Further, the Li compound may be contained in terms of reducing the ratio of the irreversible phase (for example, SiO₂) of the silicon-containing oxide particles to increase the efficiency of the active material.

In an exemplary embodiment of the present invention, the Li compound may be present in the form of a lithium silicate. The lithium silicate is represented by LiₐSi_{b}O_{c} (2≤a≤4, 0<b≤2, 2≤c≤5) and may be classified into crystalline lithium silicate and amorphous lithium silicate. The crystalline lithium silicate may be present in the form of at least one lithium silicate selected from the group consisting of Li₂SiO₃, Li₄SiO₄ and Li₂Si₂O₅ in the silicon-containing particles, and the amorphous lithium silicate may include a complex structure in the form of LiₐSi_{b}O_{c} (2≤a≤4, 0<b≤2, 2≤c≤5), and are not limited to the forms.

In an exemplary embodiment of the present invention, during X-ray diffraction analysis of the negative electrode active material, a peak derived from Si may appear, and a peak derived from at least one of Li₂SiO₃ and Li₂Si₂O₅ may appear.

The peak derived from Si may include a diffraction peak due to Si (111) and/or Si (220), and the diffraction peak due to Si (111) may appear in a range of diffraction angle (2θ) = 27.5° to 29.5°, and the diffraction peak due to Si (220) may appear in a range of diffraction angle (2θ) = 45° to 50°.

The peak derived from Li₂SiO₃ may appear in a range of diffraction angle (2θ) = 17.5° to 20.5°, and the peak derived from Li₂Si₂O₅ may appear in a range of diffraction angle (2θ) = 23.0° to 25.5°. However, the peak derived from the compounds may include a peak appearing in another diffraction angle range other than the above-described diffraction angle range.

An X-ray diffraction analysis of the negative electrode active material may be performed using an X-ray diffraction (XRD) analyzer (trade name: D4-endavor, manufacturer: Bruker). Specifically, an X-ray wavelength generated by CuKα can be used, a sample for XRD analysis is prepared by putting 0.3 g of a negative electrode active material into a cylindrical holder with a diameter of 2.5 cm and a height of 2.5 mm and performing a planarization operation with a slide glass such that the height of the sample in the holder is constant, and then a peak may be measured by setting the SCAN TIME of the XRD analyzer at 1 hour and 15 minutes, setting a measurement region as a region where 2θ is 10° to 90°, and setting STEP TIME and STEP SIZE such that 2θ is scanned by 0.02° per second.

In an exemplary embodiment of the present invention, Li may be included in an amount of 0.1 part by weight to 25 parts by weight based on total 100 parts by weight of the negative electrode active material. Specifically, the Li may be included in an amount of 1 part by weight to 15 parts by weight, more specifically 2 parts by weight to 11 parts by weight. In an example, the content of Li may be 4 parts by weight or more, 6 parts by weight or more, and 8 parts by weight or more, and may be 10 parts by weight or less, based on total 100 parts by weight of the negative electrode active material. There is a problem in that as the content of Li is increased, the initial efficiency is increased, but the discharge capacity is decreased, so that when the content satisfies the above range of 0.1 part by weight to 25 parts by weight, appropriate discharge capacity and initial efficiency may be implemented.

The content of the Li element may be confirmed by ICP analysis. Specifically, after a predetermined amount (about 0.01 g) of the negative electrode active material is aliquoted, the negative electrode active material is completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of an element to be analyzed using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the contents of the elements of the prepared negative electrode active material may be analyzed by converting the total sum so as to be the theoretical value.

In an exemplary embodiment of the present invention, the silicon-containing composite particles may include an additional metal atom. The metal atom may be present in the form of at least one of a metal atom, a metal silicate, a metal silicide, and a metal oxide in the silicon-containing composite particle. The metal atom may include at least one selected from the group consisting of Mg, Li, Al and Ca. Accordingly, the initial efficiency of the negative electrode active material may be improved.

The silicon-containing composite particles according to the present invention have a carbon layer provided on at least a part of the surface thereof. The carbon layer may be in the form of being coated on at least a part of the particle surface. That is, the carbon layer may be in the form of being partially coated on the particle surface or being coated on the entire particle surface. By the carbon layer, conductivity is imparted to the negative electrode active material, and the initial efficiency, service life characteristics, and battery capacity characteristics of the secondary battery may be improved.

In an exemplary embodiment of the present invention, the carbon layer includes an amorphous phase.

Specifically, the carbon layer may include amorphous carbon. Alternatively, the carbon layer may be an amorphous carbon layer. The amorphous carbon may suppress the expansion of the silicon-containing composite particles by appropriately maintaining the strength of the carbon layer.

Further, the carbon layer may or may not include additional crystalline carbon.

The crystalline carbon may further improve the conductivity of the negative electrode active material. The crystalline carbon may include at least one selected in the group consisting of fullerene, carbon nanotubes and graphene.

The amorphous carbon may suppress the expansion of the silicon-containing composite particles by appropriately maintaining the strength of the carbon layer. The amorphous carbon may be a carbon-containing material formed using a carbide of at least one selected from the group consisting of tar, pitch and other organic materials, or a carbon-containing material formed using a hydrocarbon as a source of a chemical vapor deposition method.

The carbide of the other organic materials may be a carbide of sucrose, glucose, galactose, fructose, lactose, mannose, ribose, aldohexose or ketohexose and a carbide of an organic material selected from combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the carbon layer may be included in an amount of 0.1 part by weight to 50 parts by weight, 0.1 part by weight to 30 parts by weight or 0.1 part by weight to 20 parts by weight, based on total 100 parts by weight of the negative electrode active material. More specifically, the carbon layer may be included in an amount of 0.5 part by weight to 15 parts by weight, 1 part by weight to 10 parts by weight, 2 parts by weight to 8 parts by weight or 3 parts by weight to 5 parts by weight. When the above range of 0.1 part by weight to 50 parts by weight is satisfied, it may be possible to prevent a decrease in the capacity and efficiency of the negative electrode active material.

In an exemplary embodiment of the present invention, the carbon layer may have a thickness of 1 nm to 500 nm, specifically 5 nm to 300 nm. When the above range of 1 nm to 500 nm is satisfied, the conductivity of the negative electrode active material may be improved, the volume change of the negative electrode active material may be readily suppressed, and side reactions between an electrolytic solution and the negative electrode active material may be suppressed, so that there is an effect the initial efficiency and/or service life of a battery is/are improved.

Specifically, the carbon layer may be formed by a chemical vapor deposition (CVD) method using at least one hydrocarbon gas selected from the group consisting of methane, ethane and acetylene.

The silicon-containing composite particles according to the present invention include a surface layer provided on at least a part on the silicon-containing composite particle.

The surface layer may be in the form of being coated on at least a part of a silicon-containing composite particle having a carbon layer provided on the surface. That is, the surface layer may be in the form of being partially coated on the particle surface or being coated on the entire particle surface. Examples of a shape of the surface layer include an island type, a thin film type, or the like, but the shape of the surface layer is not limited thereto.

The surface layer may be provided on at least a part of an outer surface of the carbon layer. That is, the surface layer is coated adjacently on the carbon layer, and thus may be provided in the form of a particle-carbon layer-surface layer including SiOₓ (0<x<2) and a Li compound. The surface layer may substantially or completely cover the carbon layer or partially cover the carbon layer.

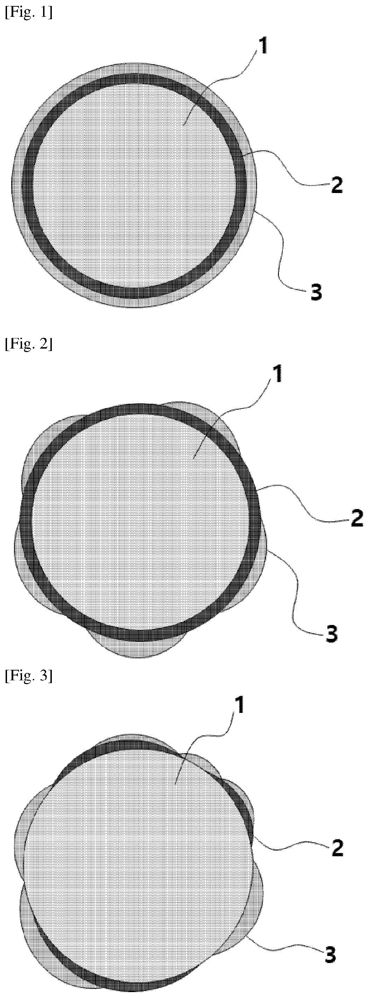

As seen in Fig. 1, the carbon layer 2 is present on the surface of the silicon-containing composite particle 1 and the surface layer is present on the entire surface of the carbon layer 2. Fig. 1 represents a thin film shape layer for the surface layer.

As seen in Fig. 2, the carbon layer 2 is present on the surface of the silicon-containing composite particle 1 and the surface layer is present on portions of the surface of the carbon layer 2. Fig. 2 represents an island type shape for the surface layer.

The surface layer may be provided on a region in which the carbon layer is not provided on the particle surface including the SiOₓ (0<x<2) and the Li compound. That is, the surface layer is coated adjacently on the particle including the SiOₓ (0<x<2) and the Li compound, and thus may be provided in the form of a particle-surface layer including SiOₓ (0<x<2) and a Li compound. As seen in Fig. 3, the carbon layer 2 and the surface layer 3 are present on overlapping and non-overlapping portions of the surface of the silicon-containing composite particle 1.

In one embodiment, the surface layer includes an amorphous Al_{z}P_{w}Oᵥ (0<z≤10, 0<w≤10, and 0<v≤10) phase. The Al_{z}P_{w}Oᵥ phase may include an aluminum oxide, a phosphorus oxide, an aluminum phosphate and the like, and z, w and v mean the number ratio of each atom. In an example, the Al_{z}P_{w}Oᵥ phase may include a mixture or compound formed from AlPO₄ or Al(PO₃).

In one embodiment, the surface layer includes an amorphous Li_{y}Al_{z}P_{w}Oᵥ (0<y≤10, 0<z≤10, 0<w≤10, and 0<v≤10) phase. The Li_{y}Al_{z}P_{w}Oᵥ phase may include an aluminum oxide, a phosphorus oxide, a lithium oxide, an aluminum phosphate, a lithium salt, a lithium phosphate, a lithium aluminate, and the like, and y, z, w and v means the number ratio of each atom. In an example, the Li_{y}Al_{z}P_{w}Oᵥ phase may include a mixture or compound formed from Li₃PO₄, AlPO₄, Al(PO₃)₃, or LiAlO₂.

The surface layer may include a B_{z1}P_{w1}Oᵥ₁ (0<z1≤10, 0<w1≤10, and 0<v1≤10) phase. The B_{z1}P_{w1}Oᵥ₁ phase may include a boron oxide, a phosphorus oxide, an boron phosphate, and the like, and z1, w1 and v1 means the number ratio of each atom.

The surface layer may include a Li_{y1}B_{z1}P_{w1}Oᵥ₁ (0<y1≤10, 0<z1≤10, 0<w1≤10, and 0<v1≤10) phase. The Li_{y1}B_{z1}P_{w1}Oᵥ₁ phase may include a boron oxide, a phosphorus oxide, a lithium oxide, an boron phosphate, a lithium salt, a lithium phosphate, a lithium borate, and the like, and y1, z1, w1 and v1 means the number ratio of each atom.

When an inorganic surface layer as defined in claim 1 is provided, it may be possible to prevent a phenomenon in which the Li compound included in the silicon-containing composite particles reacts with the moisture of the slurry to lower the viscosity of the slurry, and there may be an effect of improving the stability of the electrode state and/or the charge/discharge capacity.

In an exemplary embodiment of the present invention, the surface layer may be an amorphous phase.

When the surface layer is made of a crystalline material, it may become difficult for Li ions to enter and exit, so there may be a problem in that resistance and service life characteristics deteriorate. The negative electrode active material of the present invention may have an effect capable of stably implementing the capacity and/or efficiency while effectively reducing side reactions on the slurry because the surface layer includes the amorphous phase described above to facilitate the entry and exit of Li ions compared to the case where the surface layer does not include an amorphous phase.

In an exemplary embodiment of the present invention, the surface layer may further include one or more selected from the group consisting of Li₂O, LiOH and Li₂CO₃. In general, since materials remaining in the process of doping silicon-containing particles with lithium may be exposed to moisture or air to form lithium by-products such as Li₂O, LiOH and Li₂CO₃, the surface layer may be in the form including one or more selected from the group consisting of Li₂O, LiOH and Li₂CO₃.

In an exemplary embodiment of the present invention, y may satisfy 0<y≤3.

In an exemplary embodiment of the present invention, z may satisfy 0<z≤1.

In an exemplary embodiment of the present invention, w may satisfy 0.5≤w≤3.

In an exemplary embodiment of the present invention, v may satisfy 4<v≤12.

The surface layer may be formed by dry-mixing i) silicon-containing composite particles and an aluminum phosphate, ii) silicon-containing composite particles, an aluminum precursor and a phosphorus precursor or iii) silicon-containing composite particles and a Li-Al-P-O-containing precursor and heat-treating the mixture or mixing i), ii) or iii) with a solvent, and then reacting the mixture while vaporizing the solvent.

In an exemplary embodiment of the present invention, during the X-ray diffraction analysis of the negative electrode active material, a crystalline peak derived from the surface layer does not appear. Specifically, a crystalline peak derived from a Li_{y}Al_{z}P_{w}Oᵥ (0<y≤10, 0<z≤10, 0<w≤10, and 0<v≤10) phase included on the surface layer is not detected. When the crystalline peak derived from the surface layer appears, there may be a problem in that the capacity and/or efficiency deteriorate(s) because the surface layer includes an excessive amount of crystalline material. In an example, the crystalline peak derived from the surface layer can be recognized through changes before and after the coating of the surface layer. Specifically, in the case of XRD, crystalline peaks are detected, and it can be confirmed that when there is no difference in XRD graph of the negative electrode active material before and after the coating of the surface layer, the crystalline peak derived from the surface layer does not appear and the surface layer is formed of an amorphous phase.

The amorphous phase included in the surface layer is included in an amount of more than 50 parts by weight based on total 100 parts by weight of the surface layer. Specifically, the amorphous phase may be included in an amount of 60 parts by weight or more, 70 parts by weight or more, 80 parts by weight or more, 90 parts by weight or more, 95 parts by weight or more or 99 parts by weight or more, and 100 parts by weight or less or less than 100 parts by weight, based on total 100 parts by weight of the surface layer. By satisfying the above range of more than 50 parts by weight, there may be an effect capable of efficiently suppressing side reactions on the slurry and stably implementing the capacity and/or efficiency.

In an exemplary embodiment of the present invention, the surface layer may be included in an amount of 10 parts by weight or less based on total 100 parts by weight of the negative electrode active material. Specifically, the surface layer may be included in an amount of 8 parts by weight or less, 6 parts by weight or less or 5 parts by weight or less, and 0.1 part by weight or more or 0.5 part by weight or more. More specifically, the surface layer may be included in an amount of 1 part by weight or more and 5 parts by weight or less or 1.5 parts by weight or more and 3 parts by weight or less. There are problems in that when the content of the surface layer is less than the above range (e.g., less than 0.1 part by weight), it may be difficult to prevent the generation of gas on the slurry, and when the content is more than the above range (e.g., more than 10 parts by weight), it may be difficult to implement the capacity or efficiency.

In an exemplary embodiment of the present invention, the weight ratio of the surface layer and the carbon layer may be 1 : 0.1 to 1 : 30. Specifically, the weight ratio may be 1 : 0.5 to 1 : 5 or 1 : 1 to 1 : 4 or 1 : 1 to 1 : 3. By satisfying the above range of 1 : 0.1 to 1 : 30, silicon-containing composite particles can be effectively coated with the carbon layer and the surface layer to efficiently suppress side reactions on the slurry and the capacity and/or efficiency can be stably implemented. In contrast, there may be problems in that when the content of the surface layer is too much higher than that of the carbon layer, it may be difficult to implement the capacity or efficiency, and when the content of the carbon layer is too much higher than that of the surface layer, it may be difficult to prevent the generation of gas on the slurry.

In an exemplary embodiment of the present invention, the surface layer may be included in an amount of 90 parts by weight or less based on 100 parts by weight of the carbon layer. Specifically, the surface layer may be included in an amount of 80 parts by weight or less, 70 parts by weight or less, 60 parts by weight or less, or 50 parts by weight or less, based on 100 parts by weight of the carbon layer. Further, the surface layer may be included in an amount of 0.1 part by weight or more, 1 part by weight or more, 5 parts by weight or more, or 10 parts by weight or more, based on 100 parts by weight of the carbon layer. By satisfying the above range, there may be an effect capable of effectively coating silicon-containing composite particles with the carbon layer and the surface layer to efficiently suppress side reactions on the slurry and stably implementing the capacity and/or efficiency.

The negative electrode active material may have an average particle diameter (D50) of 0.1 µm to 30 µm, specifically 1 µm to 20 µm, and more specifically 1 µm to 10 µm. When the above range of 0.1 µm to 30 µm is satisfied, the active material during charging and discharging may be ensured to be structurally stable, and it may be possible to prevent a problem in that the volume expansion/contraction level also becomes large as the average particle diameter is excessively increased, and to prevent a problem in that the initial efficiency is reduced because the average particle diameter is excessively small.

### <Preparation method of negative electrode active material>

In an exemplary embodiment of the present invention, a method for preparing the negative electrode active material includes: preparing silicon-containing composite particles; and providing a surface layer on at least a part on the silicon-containing composite particles.

The silicon-containing composite particles may be formed through forming preliminary particles by heating and vaporizing a Si powder and a SiO₂ powder under vacuum, and then depositing the vaporized mixed gas; forming a carbon layer on the preliminary particles; and mixing the preliminary particles on which the carbon layer is formed with a Li powder, and then heat-treating the resulting mixture.

Alternatively, the silicon-containing composite particles may be formed through forming preliminary particles by heating and vaporizing a Si powder and a SiO₂ powder under vacuum, and then depositing the vaporized mixed gas; and mixing the preliminary particles with a Li powder, and then heat-treating the resulting mixture.

Specifically, the mixed powder of the Si powder and the SiO₂ powder may be heat-treated at 1,400°C to 1,800°C or 1,400°C to 1,600°C under vacuum.

The formed preliminary particles may be present in the form of SiOₓ (x=1).

The silicon-containing composite particles may include the above-described Li silicates, Li silicides, Li oxides, and the like.

The particle size of the silicon-containing composite particles may be adjusted by a method such as a ball mill, a jet mill, or an air current classification, and the method is not limited thereto.

In the forming of the carbon layer, the carbon layer may be prepared by using a chemical vapor deposition (CVD) method using a hydrocarbon gas, or by carbonizing a material to be used as a carbon source.

Specifically, the carbon layer may be formed by introducing the formed preliminary particles into a reaction furnace, and then subjecting a hydrocarbon gas to chemical vapor deposition (CVD) at 600°C to 1,200°C. The hydrocarbon gas may be at least one hydrocarbon gas selected from the group consisting of methane, ethane, propane and acetylene, and may be heat-treated at 900°C to 1,000°C.

In an exemplary embodiment of the present invention, providing a surface layer on at least a part on the silicon-containing composite particles may include mixing and reacting the silicon-containing composite particles and a precursor including Al and P.

The precursor may be aluminum phosphate.

The providing of the surface layer on at least a part on the silicon-containing composite particles may include dry-mixing the silicon-containing composite particles and an aluminum phosphate and heat-treating the resulting mixture or mixing the silicon-containing composite particles and the aluminum phosphate with a solvent, and then heat-treating the resulting mixture to react the silicon-containing composite particles and the aluminum phosphate while vaporizing the solvent. When the surface layer is formed by the method, the surface layer may be easily formed by reacting Li by-products formed during the preparation process of silicon-containing composite particles with an aluminum phosphate.

The aluminum phosphate may be in the form of Al_{b}P_{c}O_{d} (0<b≤10, 0<c≤10, and 0<d≤10). Specifically, the aluminum phosphate may be Al(PO₃)₃ or AlPO₄, and is not limited thereto, and a salt used in the art in order to form the surface layer may be appropriately employed.

In another exemplary embodiment of the present invention, providing a surface layer on at least a part on the silicon-containing composite particles may include mixing and reacting the silicon-containing composite particles, an aluminum precursor and a phosphorus precursor.

Specifically, the providing of the surface layer on at least a part on the silicon-containing composite particles may include dry-mixing the silicon-containing composite particles, the precursor including an aluminum precursor and a phosphorus precursor and heat-treating the resulting mixture or mixing the silicon-containing composite particles, the precursor including aluminum precursor and a phosphorus precursor with a solvent, and then heat-treating the resulting mixture to react the silicon-containing composite particles, the precursor including the Al and the phosphorus precursor while vaporizing the solvent. When the surface layer is formed by the method, the surface layer may be easily formed by reacting Li by-products formed during the preparation process of silicon-containing composite particles with the precursor including the Group 13and a phosphorus precursor.

The aluminum precursor may be an aluminum oxide in the form of AlₐO_{b} (0<a≤10, 0<b≤10), and may be specifically Al₂O₃.

Alternatively, the aluminum precursor may be aluminum hydroxide, aluminum nitrate, aluminum sulfate, or the like, and may be specifically Al(OH)₃, Al(NO₃)₃·9H₂O or Al₂(SO₄)₃, and is not limited thereto, and an aluminum precursor used in the art in order to form the surface layer may be appropriately employed.

The phosphorus precursor may be a phosphorus oxide in the form of P_{c}O_{d} (0<c≤10, 0<d≤10).

Alternatively, the phosphorus precursor may be ammonium phosphate, ammonium phosphate dibasic, phosphoric acid, or the like, and may be specifically (NH₄)₃PO₄, (NH₄)₂HPO₄, H₃PO₄ or NH₄H₂PO₄, and is not limited thereto, and a phosphorus precursor used in the art in order to form the surface layer may be appropriately employed.

Alternatively, the providing of the surface layer on at least a part on the silicon-containing composite particles may include dry-mixing the silicon-containing composite particles and a Li-Al-P-O-containing precursor and heat-treating the resulting mixture or mixing the silicon-containing composite particles and a Li-Al-P-O-containing precursor with a solvent, and then heat-treating the resulting mixture to react the silicon-containing composite particles and the Li-Al-P-O-containing precursor while vaporizing the solvent. When the surface layer is formed by the method, the surface layer may be formed by directly introducing a Li-Al-P-O-containing precursor.

The Li-Al-P-O-containing precursor may be in the form of Li_{y}Al_{z}P_{w}Oᵥ (0<y≤10, 0<z≤10, 0<w≤10, and 0<v≤10). Specifically, the Li-Al-P-O-containing precursor may be a mixture or compound complexly formed from Li₃PO₄, AlPO₄ Al(PO₃)₃, LiAlO₂, or the like, and is not limited thereto, and a configuration used in the art in order to form the surface layer may be appropriately employed.

In the providing of the surface layer on at least a part on the silicon-containing composite particles, the heat treatment may be performed at 500°C to 700°C, specifically 550°C to 650°C. However, the heat treatment temperature is not limited thereto, and may vary according to the salt, precursor, or the like used. When the heat treatment temperature is higher than the above range of 500°C to 700°C, there may be a problem in that resistance and service life characteristics deteriorate and the capacity and/or efficiency deteriorate(s) because the surface layer is formed of a crystalline material, which may make it difficult for Li ions to enter and exit through the surface layer. When the heat treatment temperature satisfies the above range of 500°C to 700°C, the salt or precursor may react well with Li by-products to allow the surface layer to include Li, so that there may be an effect in that the discharging rate-limiting characteristics (rate capability) become excellent because the durability of the formed negative electrode active material to moisture is enhanced and the Li diffusion resistance of the negative electrode active material surface is lowered.

The solvent may be water or ethanol and is not limited thereto, and a solvent used in the art may be appropriately employed.

The surface layer formed on the silicon-containing composite particles preferably includes a Li_{y}Al_{z}P_{w}Oᵥ (0<y≤10, 0<z≤10, 0<w≤10, and 0<v≤10) phase, and the Li_{y}Al_{z}P_{w}Oᵥ phase may be an amorphous phase.

The content on the surface layer is the same as that described above.

### <Negative electrode>

The negative electrode according to an exemplary embodiment of the present invention may include the above-described negative electrode active material.

Specifically, the negative electrode may include a negative electrode current collector and a negative electrode active material layer disposed on at least one surface of the negative electrode current collector. The negative electrode active material layer may include the negative electrode active material. Furthermore, the negative electrode active material layer may further include a binder and/or a conductive material.

The negative electrode active material layer may be formed by applying a negative electrode slurry including a negative electrode active material, a binder and/or a conductive material to at least one surface of a negative electrode current collector and drying and rolling the applied negative electrode slurry on the negative electrode current collector.

The negative electrode slurry may include the negative electrode active material, the binder and/or the conductive material.

The negative electrode slurry may further include an additional negative electrode active material.

As the additional negative electrode active material, a compound capable of reversible intercalation and deintercalation of lithium may be used. Specific examples thereof include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be undoped and doped with lithium such as SiO_{β} (0 < β < 2), SnO₂, vanadium oxide, lithium titanium oxide, and lithium vanadium oxide; or a composite including the metallic compound and the carbonaceous material such as a Si-C composite or a Sn-C composite, and the like, and any one thereof or a mixture of two or more thereof may be used. Furthermore, a metallic lithium thin film may be used as the negative electrode active material. Alternatively, both low crystalline carbon and high crystalline carbon, and the like may be used as the carbon material. Typical examples of the low crystalline carbon include soft carbon and hard carbon, and typical examples of the high crystalline carbon include irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The additional negative electrode active material may be a carbon-containing negative electrode active material.

In an exemplary embodiment of the present invention, a weight ratio of the negative electrode active material and the additional negative electrode active material included in the negative electrode slurry may be 10:90 to 90:10, specifically 10:90 to 50:50.

The negative electrode current collector is sufficient as long as the negative electrode current collector has conductivity without causing a chemical change to the battery, and is not particularly limited.

For example, as the current collector, it is possible to use copper, stainless steel, aluminum, nickel, titanium, fired carbon, or a material in which the surface of aluminum or stainless steel is surface-treated with carbon, nickel, titanium, silver, and the like. Specifically, a transition metal, such as copper or nickel which adsorbs carbon well, may be used as a current collector. Although the current collector may have a thickness of 6 µm to 20 µm, the thickness of the current collector is not limited thereto.

The binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene-butadiene rubber (SBR), fluorine rubber, polyacrylic acid and a material in which the hydrogen thereof is substituted with Li, Na, Ca, or the like, and may also include various copolymers thereof.

The conductive material is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a carbon fluoride powder; a metal powder such as an aluminum powder, and a nickel powder; a conductive whisker such as zinc oxide and potassium titanate; a conductive metal oxide such as titanium oxide; a conductive material such as polyphenylene derivatives, and the like.

The negative electrode slurry may further include a solvent for forming a negative electrode slurry. Specifically, the solvent for forming a negative electrode slurry may include at least one selected from the group consisting of distilled water, ethanol, methanol, and isopropyl alcohol, specifically distilled water in terms of facilitating the dispersion of the components.

In an exemplary embodiment of the present invention, the solid content weight of the negative electrode slurry may be 20 parts by weight to 75 parts by weight, specifically 30 parts by weight to 70 parts by weight, based on total 100 parts by weight of the negative electrode slurry.

### <Secondary battery>

A secondary battery according to an exemplary embodiment of the present invention may include the above-described negative electrode according to an exemplary embodiment. Specifically, the secondary battery may include a negative electrode, a positive electrode, a separator interposed between the positive electrode and the negative electrode, and an electrolyte, and the negative electrode is the same as the above-described negative electrode. Since the negative electrode has been previously described, a specific description thereof will be omitted.

The positive electrode may include a positive electrode current collector and a positive electrode active material layer formed on at least one surface of the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector may typically have a thickness of 3 µm to 500 µm, and the adhesion of the positive electrode active material may also be enhanced by forming fine convex and concave irregularities on the surface of the current collector. For example, the positive electrode current collector may be used in various forms such as a film, a sheet, a foil, a net, a porous body, a foam, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change in a battery to be constituted. Specific examples thereof include graphite such as natural graphite or artificial graphite; a carbon-containing material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

The positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such a cyclic carbonate may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

According to still another exemplary embodiment of the present invention, provided are a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric car, a hybrid electric vehicle, a plug-in hybrid electric vehicle, and a power storage system.

### Example 1-1

100 g of a powder in which Si and SiO₂ was mixed at a molar ratio of 1:1 was heated under vacuum at a sublimation temperature of 1,400°C in a reactor. Thereafter, a mixed gas of the vaporized Si and SiO₂ was reacted in a cooling zone in a vacuum state having a cooling temperature of 800°C and condensed into a solid phase. Thereafter, preliminary silicon-containing particles were prepared by performing a heat treatment at a temperature of 800°C in an inert atmosphere. Thereafter, after 15 sus ball media were introduced into the preliminary silicon-containing particles using a ball mill, silicon-containing particles having a size of (D₅₀) = 6 µm were prepared by pulverizing the preliminary silicon-containing particles for 3 hours. Thereafter, the silicon-containing particles were positioned in a hot zone of a CVD apparatus while maintaining an inert atmosphere by flowing Ar gas, and the methane was blown into the hot zone at 900°C using Ar as a carrier gas and reacted at 10⁻¹ torr (13.3 Pa) for 20 minutes to form a carbon layer on the surface of the silicon-containing particles.

Silicon-containing composite particles doped with Li were prepared by adding 10 g of a Li metal powder to 90 g of the silicon-containing particles and performing a heat treatment at a temperature of 800°C in an inert atmosphere.

After 1.5 g of Al(PO₃)₃ was mixed with 98.5 g of the silicon-containing composite particles, a negative electrode active material, in which a surface layer including Li, Al, P and O was formed on the silicon-containing composite particle surface, was prepared by heat-treating the resulting mixture at 600°C. The negative electrode active material had a D₅₀ of 6 µm and a BET specific surface area of 2.5 m²/g.

During ICP analysis of the negative electrode active material, the contents of Li, Al, and P were 9.5 wt%, 0.15 wt%, and 0.5 wt%, respectively, based on the total 100 wt% of the negative electrode active material.

### Example 1-2

A negative electrode active material was prepared in the same manner as in Example 1-1, except that AlPO₄ was used instead of Al(PO₃)₃. The negative electrode active material had a D₅₀ of 6 µm and a BET specific surface area of 2.5 m²/g.

During ICP analysis of the negative electrode active material, the contents of Li, Al, and P were 9.5 wt%, 0.15 wt%, and 0.17 wt%, respectively, based on the total 100 wt% of the negative electrode active material.

### Example 1-3

A negative electrode active material was prepared in the same manner as in Example 1-1, except that 97 g of the silicon-containing composite particles and 3 g of Al(PO₃)₃ were used. The negative electrode active material had a D₅₀ of 6 µm and a BET specific surface area of 2.5 m²/g.

During ICP analysis of the negative electrode active material, the contents of Li, Al, and P were 9.4 wt%, 0.3 wt%, and 0.9 wt%, respectively, based on the total 100 wt% of the negative electrode active material.

### Comparative Example 1-1

A negative electrode active material was prepared in the same manner as in Example 1-1, except that the heat treatment was performed at 800°C during the formation of the surface layer. The negative electrode active material had a D₅₀ of 6 µm and a BET specific surface area of 2.5 m²/g.

### Comparative Example 1-2

A negative electrode active material was prepared in the same manner as in Example 1-1, except that Al(PO₃)₃ was not mixed with the silicon-containing composite particles. The negative electrode active material had a D₅₀ of 6 µm and a BET specific surface area of 2.5 m²/g.

The negative electrode active materials prepared in the Examples and the Comparative Examples are shown in the following Table 1.

**[Table 1]**

| | Presence or absence of surface layer | Phase of surface layer | Based on 100 parts by weight of negative electrode active material | | |
|---|---|---|---|---|---|
| | | | Content of surface layer (parts by weight) | Content of carbon layer (parts by weight) | Li content (parts by weight) |
| Example 1-1 | O | Amorphous | 1.5 | 4.5 | 9.5 |
| Example 1-2 | O | Amorphous | 1.5 | 4.5 | 9.5 |
| Example 1-3 | O | Amorphous | 3 | 4.3 | 9.4 |
| Comparative Example 1-1 | O | Crystalline | 1.5 | 4.5 | 9.5 |
| Comparative Example 1-2 | X | - | 0 | 5 | 9.5 |

The content of Li, Al and P atoms was confirmed by an ICP analysis using an inductively coupled plasma atomic emission spectrometer (ICP-OES AVIO 500 of Perkin-Elmer 7300).

The phase of the surface layer was confirmed through the change of an XRD graph before and after the surface layer coating. When the surface layer is amorphous, there was no change in XRD pattern before and after the coating.

The content of the carbon layer was confirmed under oxygen conditions by an elemental analysis method through combustion (G4 ICARUS of Bruker).

The D50 of the negative electrode active material was analyzed by a PSD measurement method using a Microtac apparatus.

The specific surface area was measured by degassing gas at 200°C for 8 hours using a BET measuring apparatus (BEL-SORP-MAX, Nippon Bell), and performing N₂ adsorption/desorption at 77 K.

### <Experimental Example 1: Evaluation of discharge capacity, initial efficiency and capacity retention rate>

Negative electrodes and batteries were prepared using the negative electrode active materials in the Examples and the Comparative Examples, respectively.

A mixture was prepared by mixing the negative electrode active material, a conductive material carbon black, and a binder polyacrylic acid (PAA) at a weight ratio of 80:10:10. Thereafter, 7.8 g of distilled water was added to 5 g of the mixture, and then the resulting mixture was stirred to prepare a negative electrode slurry. The negative electrode slurry was applied to one surface of a copper (Cu) metal thin film which is a negative electrode current collector having a thickness of 20 µm and dried. In this case, the temperature of the circulating air was 60°C. Subsequently, a negative electrode was prepared by roll pressing the negative electrode current collector and drying the negative electrode current collector in a vacuum oven at 130°C for 12 hours.

A lithium (Li) metal thin film obtained by cutting a lithium (Li) metal sheet into a circle of 1.7671 cm² was used as a positive electrode. A porous polyethylene separator was interposed between the positive electrode and the negative electrode, then an electrolytic solution, in which vinylene carbonate was dissolved in 0.5 part by weight in a mixed solution of methyl ethyl carbonate (EMC) and ethylene carbonate (EC) at a mixed volume ratio of 7 : 3, and LiPF₆ having a concentration of 1 M was dissolved, was injected thereinto to prepare a lithium coin half-cell.

The discharge capacity, initial efficiency, and capacity retention rate were evaluated by charging and discharging the prepared battery, and are shown in the following Table 2.

For the 1st and 2nd cycles, the battery was charged and discharged at 0.1 C, and from the 3rd cycle to the 49th cycle, the battery was charged and discharged at 0.5 C. The 50th cycle was completed in a charged state (with lithium contained in the negative electrode).
Charging conditions: CC (constant current)/CV (constant voltage) (5 mV/0.005 C current cut-off)
Discharging conditions: CC (constant current) conditions 1.5 V

The discharge capacity (mAh/g) and initial efficiency (%) were derived from the results during the first charge/discharge. Specifically, the initial efficiency (%) was derived by the following calculation. 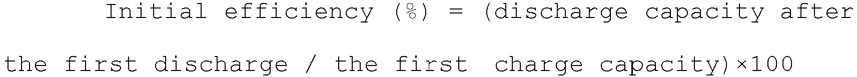 Initial efficiency (%) = (discharge capacity after the first discharge / the first charge capacity) ×100

The capacity retention rate was each derived by the following calculation. 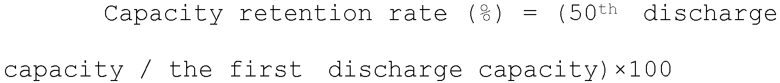 Capacity retention rate (%) = (50th discharge capacity / the first discharge capacity)×100

**[Table 2]**

| Battery | Discharge capacity (mAh/g) | Initial efficiency (%) | Capacity retention rate (%) |
|---|---|---|---|
| Example 1-1 | 1380 | 91 | 40 |
| Example 1-2 | 1380 | 91 | 40 |
| Example 1-3 | 1370 | 90 | 40 |
| Comparative Example 1-1 | 1300 | 89 | 35 |
| Comparative Example 1-2 | 1250 | 86 | 30 |

In Table 2, it can be confirmed that the discharge capacity, the initial efficiency and the capacity retention rate are all excellent because in Examples 1-1 to 1-3, lithium by-products included in the silicon-containing composite particles can be effectively removed by providing the surface layer as an amorphous phase on the silicon-containing composite particles and the silicon-containing composite particles are effectively coated with the surface layer to prevent reaction of lithium by-products and the lithium compound of the silicon-containing composite particles with moisture of the slurry, thereby preventing the physical properties of the slurry from deteriorating.

In contrast, the surface layer was formed of a crystalline material due to the high heat treatment temperature in Comparative Example 1-1, which made it difficult for Li ions to enter and exit, so it could be confirmed that the discharge capacity, initial efficiency and service life characteristics deteriorated.

Since Comparative Example 1-2 did not include a surface layer, the Li compound included in the silicon-containing composite particles easily reacted with moisture of the slurry to change the viscosity of the slurry and side reactions of the slurry occurred, so it could be confirmed that the initial efficiency and service life characteristics deteriorated.

### Example 2-1

A negative electrode active material, in which a surface layer including Al, P and O was formed, was prepared in the same manner as in Example 1-1, except that the silicon-containing composite particles and Al(PO₃)₃ were dispersed in ethanol, and then ethanol was evaporated by heating the resulting dispersion at 90°C.

The phase of the surface layer of the formed negative electrode active material was amorphous, and the contents of the surface layer, the carbon layer and Li were 1.5 parts by weight, 4.5 parts by weight and 9.5 parts by weight, respectively, based on total 100 parts by weight of the negative electrode active material. The negative electrode active material had a D₅₀ of 6 µm and a specific surface area of 2.5 m²/g.

### <Experimental Example 2: Evaluation of rate characteristics>

Negative electrodes and batteries were manufactured in the same manner as in Experimental Example 1 using the negative electrode active materials in Examples 1-1 and 2-1.

The charge and discharge of the batteries manufactured in Examples 1-1 and 2-1 were evaluated. While fixing the charge rate to 0.2 C and changing the discharge rate to 0.2 C, 1.0 C, 3.0 C and 5.0 C, the rate characteristics (rate capability) were measured to see how much the discharge capacity was reduced, and are shown in the following Table 3. Meanwhile, the discharge capacity at the time of discharge at 0.2 C was set to 100%.

**[Table 3]**

| | Discharge capacity (%) | | | |
|---|---|---|---|---|
| Battery | 0.2 C | 1.0 C | 3.0 C | 5.0 C |
| Example 1-1 | 100 | 95 | 90 | 80 |
| Example 2-1 | 100 | 90 | 77 | 65 |

In Examples 1-1 and 2-1, the surface layer is provided as an amorphous phase on the surface of the silicon-containing composite particles, so as to prevent lithium by-products and the lithium compound of the silicon-containing composite particles from reacting with moisture of a slurry by effectively coating the silicon-containing composite particles with the surface layer, thereby serving to prevent the physical properties of the slurry from deteriorating.

Among them, the surface layer does not include Li in Example 2-1, whereas the surface layer includes Li in Example 1-1, thus the discharge rate-limiting characteristics (rate capability) is excellent in Example 1-1 due to the reduction in the Li diffusion resistance of the negative electrode active material surface, so it could be confirmed that the discharge capacity according to the discharge rate in Example 1-1 is even better than in Example 2-1.

## Claims

1. A negative electrode active material comprising:
silicon-containing composite particles (1) comprising SiOx, wherein 0<x<2, and a Li compound;
a carbon layer (2) on at least a part of a surface of the silicon-containing composite particles;
a surface layer (3) comprising an amorphous phase on at least a part of the silicon-containing composite particles (1);
wherein the amorphous phase comprised in the surface layer is comprised in an amount of more than 50 parts by weight based on a total 100 parts by weight of the surface layer; and
wherein the surface layer comprises an Al_{z}P_{w}Oᵥ phase, wherein 0<z≤10, 0<w≤10, and 0<v≤10, or a Li_{y}Al_{z}P_{w}Oᵥ phase, wherein 0<y≤10, 0<z≤10, 0<w≤10, and 0<v≤10, and wherein the Al_{z}P_{w}Oᵥ phase or the Li_{y}Al_{z}P_{w}Oᵥ phase is an amorphous phase.

2. The negative electrode active material of claim 1, wherein during X-ray diffraction analysis of the negative electrode active material, a crystalline peak derived from the surface layer does not appear, wherein the X-ray diffraction analysis of the negative electrode active material is conducted as described in the specification.

3. The negative electrode active material of claim 1, wherein during X-ray diffraction analysis of the negative electrode active material, a peak derived from Si appears, and a peak derived from at least one of Li2SiO3 and Li2Si2O5 appears, wherein the X-ray diffraction analysis of the negative electrode active material is conducted as described in the specification.

4. The negative electrode active material of claim 1, wherein a weight ratio of the surface layer and the carbon layer is 1:0.1 to 1:30.

5. The negative electrode active material of claim 1, wherein the surface layer is comprised in an amount of 90 parts by weight or less based on 100 parts by weight of the carbon layer.

6. The negative electrode active material of claim 1, wherein the surface layer further comprises one or more selected from the group consisting of Li₂O, LiOH and Li₂CO₃.

7. The negative electrode active material of claim 1, wherein Li is comprised in an amount of 0.1 part by weight to 25 parts by weight based on a total 100 parts by weight of the negative electrode active material.

8. The negative electrode active material of claim 1, wherein the carbon layer is comprised in an amount of 0.1 part by weight to 50 parts by weight based on a total 100 parts by weight of the negative electrode active material.

9. The negative electrode active material of claim 1, wherein the surface layer is present on an outer surface of at least a part of the carbon layer.

10. The negative electrode active material of claim 1, wherein the surface layer is present on a region in which the carbon layer is not provided on the particle surface.

11. A negative electrode comprising the negative electrode active material according to claim 1.

12. A secondary battery comprising the negative electrode according to claim 11.

## Patentansprüche

1. Negativelektroden-Aktivmaterial, umfassend:
siliciumhaltige Kompositpartikel (1), umfassend SiOx, worin 0<x<2, und eine Li-Verbindung;
eine Kohlenstoffschicht (2) auf zumindest einem Teil einer Oberfläche der siliciumhaltigen Kompositpartikel;
eine Oberflächenschicht (3), umfassend eine amorphe Phase auf zumindest einem Teil der siliciumhaltigen Kompositpartikel (1);
worin die in der Oberflächenschicht umfasste amorphe Phase in einer Menge von mehr als 50 Gewichtsteilen umfasst ist, bezogen auf 100 Gewichtsteile der Oberflächenschicht; und
worin die Oberflächenschicht eine Al_{z}P_{w}Oᵥ-Phase, worin 0<z≤10, 0<w≤10 und 0<y≤10, oder eine Li_{y}Al_{z}P_{w}Oᵥ-Phase, worin 0<y≤10, 0<z≤10, 0<w≤10 und 0<v≤10, umfasst, und worin die Al_{z}P_{w}Oᵥ-Phase oder die Li_{y}Al_{z}P_{w}Oᵥ-Phase eine amorphe Phase ist.

2. Negativelektroden-Aktivmaterial gemäß Anspruch 1, worin während der Röntgenbeugungsanalyse des Negativelektroden-Aktivmaterials kein aus der Oberflächenschicht stammender kristalliner Peak beobachtet wird, wobei die Röntgenbeugungsanalyse des Negativelektroden-Aktivmaterials wie in der Beschreibung angegeben durchgeführt wird.

3. Negativelektroden-Aktivmaterial gemäß Anspruch 1, worin während der Röntgenbeugungsanalyse des Negativelektroden-Aktivmaterials ein Peak, der von Si stammt, beobachtet wird, und ein Peak, der von zumindest einem von Li2SiO3 und Li2Si2O5 stammt, beobachtet wird, wobei die Röntgenbeugungsanalyse des Negativelektroden-Aktivmaterials wie in der Beschreibung angegeben durchgeführt wird.

4. Negativelektroden-Aktivmaterial gemäß Anspruch 1, worin das Gewichtsverhältnis der Oberflächenschicht zur Kohlenstoffschicht 1:0,1 bis 1:30 beträgt.

5. Negativelektroden-Aktivmaterial gemäß Anspruch 1, worin die Oberflächenschicht in einer Menge von 90 Gewichtsteilen oder weniger umfasst ist, bezogen auf 100 Gewichtsteile der Kohlenstoffschicht.

6. Negativelektroden-Aktivmaterial gemäß Anspruch 1, worin die Oberflächenschicht ferner eines oder mehrere umfasst, ausgewählt aus der Gruppe, bestehend aus Li₂O, LiOH und Li₂CO₃.

7. Negativelektroden-Aktivmaterial gemäß Anspruch 1, worin Li in einer Menge von 0,1 Gewichtsteilen bis 25 Gewichtsteilen umfasst ist, bezogen auf die Gesamtheit von 100 Gewichtsteilen des Negativelektroden-Aktivmaterials.

8. Negativelektroden-Aktivmaterial gemäß Anspruch 1, worin die Kohlenstoffschicht in einer Menge von 0,1 Gewichtsteilen bis 50 Gewichtsteilen umfasst ist, bezogen auf die Gesamtheit von 100 Gewichtsteilen des Negativelektroden-Aktivmaterials.

9. Negativelektroden-Aktivmaterial gemäß Anspruch 1, worin die Oberflächenschicht auf einer äußeren Oberfläche von zumindest einem Teil der Kohlenstoffschicht vorliegt.

10. Negativelektroden-Aktivmaterial gemäß Anspruch 1, worin die Oberflächenschicht auf einem Bereich auf der Partikeloberfläche vorliegt, in dem die Kohlenstoffschicht nicht vorgesehen ist.

11. Negative Elektrode, umfassend das Negativelektroden-Aktivmaterial gemäß Anspruch 1.

12. Sekundärbatterie, umfassend die negative Elektrode gemäß Anspruch 11.

## Revendications

1. Matériau actif d'électrode négative comprenant :
des particules composites contenant du silicium (1) comprenant du SiOx, dans lequel 0<x<2, et un composé Li ;
une couche de carbone (2) sur au moins une partie d'une surface des particules composites contenant du silicium ;
une couche de surface (3) comprenant une phase amorphe sur au moins une partie des particules composites contenant du silicium (1) ;
dans lequel la phase amorphe comprise dans la couche de surface est comprise en une quantité de plus de 50 parties en poids sur la base d'un total de 100 parties en poids de la couche de surface ; et
dans lequel la couche de surface comprend une phase Al_{z}P_{w}Oᵥ, dans laquelle 0<z≤10, 0<w≤10 et 0<v≤10, ou une phase Li_{y}Al_{z}P_{w}Oᵥ, dans laquelle 0<y≤10, 0<z≤10, 0<w≤10 et 0<v≤10, et dans lequel la phase Al_{z}P_{w}Oᵥ ou la phase Li_{y}Al_{z}P_{w}Oᵥ est une phase amorphe.

2. Matériau actif d'électrode négative selon la revendication 1, dans lequel, pendant l'analyse par diffraction des rayons X du matériau actif d'électrode négative, un pic cristallin dérivé de la couche de surface n'apparaît pas, dans lequel l'analyse par diffraction des rayons X du matériau actif d'électrode négative est effectuée comme décrit dans le fascicule.

3. Matériau actif d'électrode négative selon la revendication 1, dans lequel, pendant l'analyse par diffraction des rayons X du matériau actif d'électrode négative, un pic dérivé de Si apparaît, et un pic dérivé d'au moins un parmi Li2SiO3 et Li2Si2O5 apparaît, dans lequel l'analyse par diffraction des rayons X du matériau actif d'électrode négative est effectuée comme décrit dans le fascicule.

4. Matériau actif d'électrode négative selon la revendication 1, dans lequel un rapport en poids de la couche de surface et de la couche de carbone est de 1:0,1 à 1:30.

5. Matériau actif d'électrode négative selon la revendication 1, dans lequel la couche de surface est comprise en une quantité de 90 parties en poids ou moins sur la base de 100 parties en poids de la couche de carbone.

6. Matériau actif d'électrode négative selon la revendication 1, dans lequel la couche de surface comprend en outre un ou plusieurs choisis dans le groupe consistant en Li₂O, LiOH et Li₂CO₃.

7. Matériau actif d'électrode négative selon la revendication 1, dans lequel Li est compris en une quantité de 0,1 partie en poids à 25 parties en poids sur la base d'un total de 100 parties en poids du matériau actif d'électrode négative.

8. Matériau actif d'électrode négative selon la revendication 1, dans lequel la couche de carbone est comprise en une quantité de 0,1 partie en poids à 50 parties en poids sur la base d'un total de 100 parties en poids du matériau actif d'électrode négative.

9. Matériau actif d'électrode négative selon la revendication 1, dans lequel la couche de surface est présente sur une surface externe d'au moins une partie de la couche de carbone.

10. Matériau actif d'électrode négative selon la revendication 1, dans lequel la couche de surface est présente sur une région dans laquelle la couche de carbone n'est pas prévue sur la surface de particule.

11. Électrode négative comprenant le matériau actif d'électrode négative selon la revendication 1.

12. Batterie secondaire comprenant l'électrode négative selon la revendication 11.
